Europäisches Patentamt

European Patent Office

Office européen des brevets

(11) Numéro de publication : **0 363 279 B1**

(19)

(12) **FASCICULE DE BREVET EUROPEEN**

(45) Date de publication du fascicule du brevet :
**17.06.92 Bulletin 92/25**

(51) Int. Cl.⁵ : **F15B 1/02**

(21) Numéro de dépôt : **89402735.8**

(22) Date de dépôt : **04.10.89**

(54) **Dispositif de commande de sécurité pour électro-pompe.**

(30) Priorité : **04.10.88 FR 8813304**

(43) Date de publication de la demande :
**11.04.90 Bulletin 90/15**

(45) Mention de la délivrance du brevet :
**17.06.92 Bulletin 92/25**

(84) Etats contractants désignés :
**DE GB IT**

(56) Documents cités :
**DE-A- 2 440 903
DE-A- 3 509 335
DE-B- 1 141 193
DE-U- 8 533 311
FR-A- 1 290 260**

(56) Documents cités :
**GB-A- 2 058 225
GB-A- 2 059 638
GB-A- 2 071 783
US-A- 2 714 854**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Camus, Gérard
15, rue des Bouchères
F-95240 Cormeilles-en-Parisis (FR)**

(74) Mandataire : **Boivin, Claude
9, rue Edouard-Charton
F-78000 Versailles (FR)**

## Description

Certains circuits hydrauliques automobiles, par exemple anti-bloqueurs de roues ou correcteurs de hauteur,sont alimentés par une électro-pompe propre à remplir de liquide sous pression un accumulateur formant réserve d'énergie. L'électro-pompe est un organe de forte puissance consommant un courant de grande intensité et qui ne peut pas fonctionner en continu à pleine puissance sans risque d'échauffement excessif pouvant entraîner une fusion de connecteurs ou de gaines isolantes ou même un court-circuit.

Les fusibles ne peuvent être utilisés pour assurer une protection car, au démarrage, le courant d'appel est largement supérieur au courant maximal de fonctionnement.

Le plus souvent l'électro-pompe est commandée par un dispositif pressostatique pilotant un relais de puissance qui commande l'alimentation en courant du moteur d'entraînement de la pompe.

Lorsque la réserve atteint un niveau de pression maximal prédéterminé, le pressostat envoie au relais un ordre de coupure de courant alimentant le moteur. Lorsque cette réserve atteint un niveau de pression minimal, le pressostat relâche le relais qui réalimente le moteur.

Ainsi, en cas d'absence de signal du pressostat, l'électro-pompe est alimentée en permanence. Si cette absence de signal est due à une défaillance du circuit, par exemple fil coupé ou débranché, oxydation des contacts d'un connecteur ou blocage du pressostat, l'électro-pompe continue de fonctionner quelle que soit la pression de réserve, l'intensité augmente et l'échauffement devient anormal. L'adjonction d'une soupape de sûreté limitera le niveau de pression; elle protégera le circuit hydraulique mais sera impuissante contre l'échauffement. Des dispositifs de ce genre sont décrits dans les documents GB-A-2 071 783 et DE-A-3 509 335.

La présente invention a pour objet un dispositif d'alimentation en fluide sous pression comprenant un accumulateur hydropneumatique et une électro-pompe propre à remplir cet accumulateur de liquide sous pression, caractérisé en ce qu'il comporte un conjoncteur-disjoncteur hydraulique propre à maintenir entre deux valeurs données la pression de l'accumulateur, interposé entre l'accumulateur, l'électro-pompe et le réservoir et un détecteur de l'état du conjoncteur-disjoncteur pour piloter l'électro-pompe de sorte qu'avant l'arrêt et le démarrage de l'électro-pompe, le circuit dans lequel débite la pompe est mis en communication avec la bâche par un conduit sur lequel est interposé un gicleur.

Le conjoncteur-disjoncteur qui est un dispositif hydraulique propre à maintenir entre deux valeurs données la valeur d'une réserve de pression, peut être à un seul tiroir ou à deux tiroirs.

Si, par exemple par suite d'un incident du circuit électrique, l'électro-pompe continue de tourner, le conjoncteur-disjoncteur envoie le débit de la pompe non vers l'accumulateur, mais vers le réservoir, le circuit étant hors pression, la pompe ne risque pas de surchauffe.

Par ailleurs, l'électro-pompe étant pilotée par l'état du conjoncteur-disjoncteur, lors de son arrêt ou de sa mise en route, elle est reliée au réservoir. L'intensité du courant à établir ou à couper est donc faible; les organes de connexion électriques sont moins sollicités et leur fiabilité est accrue.

On a décrit ci-après, à titre d'exemple non limitatif, un mode de réalisation du dispositif selon l'invention, avec référence aux dessins annexés dans lesquels :

La Figure 1 montre un premier mode de réalisation, en phase de conjonction;

La Figure 2 montre le conjoncteur-disjoncteur en phase de disjonction;

La Figure 3 est une vue semblable à la Figure 2, lors du démarrage de l'électro-pompe;

La Figure 4 montre un second mode de réalisation du conjoncteur-disjoncteur.

Au dessin, on voit une électro-pompe 1 propre à alimenter, à partir d'une bâche 2, une réserve de pression 3, constituée par exemple par un accumulateur hydropneumatique. Entre la pompe 1, la bâche 2 et le réservoir de pression 3 est inséré un conjoncteur-disjoncteur qui est désigné au dessin d'une façon générale par la référence 4 et est propre à maintenir la valeur de la pression de réserve entre deux valeurs données. L'état du conjoncteur-disjoncteur 4 est contrôlé par un détecteur 5 qui pilote l'alimentation de l'enroulement 6 de l'électro-pompe 1 par l'intermédiaire d'un relais 7.

Le conjoncteur-disjoncteur 4 comprend un carter 8, dans lequel est réalisé un alésage 9 et auquel est vissé un corps 10 délimitant deux chambres 11 et 12. La réserve de pression 3 est vissée dans l'une des extrémités de l'alésage 9 et communique avec la chambre 11. Ce corps 10 présente deux perçages radiaux 13 et 14; le perçage 13 se trouve en regard d'un raccord 15 relié au refoulement de l'électro-pompe 1. Un perçage longitudinal 16 sur lequel est interposé un clapet anti-retour 17 permet de mettre en communication le perçage 13 et la chambre 11. Dans le corps 10 est monté coulissant un tiroir 18 présentant un évidement annulaire 18a qui, selon la position du tiroir, met en communication les deux perçages 13 et 14 ou obture le débouché du perçage 14. Un ressort 19 maintient une coupelle 20 en butée contre l'extrémité du tiroir 18 et tend à maintenir ce dernier dans la position dans laquelle les deux perçages 13 et 14 sont mis en communication l'un avec l'autre. Le détecteur 5 comporte une aiguille 5a qui est ou non en contact avec la coupelle 20, contact qui permet de déterminer la position du tiroir 18.

Le carter 8 comporte un deuxième alésage 21 dans lequel est monté coulissant un deuxième tiroir 22. Une chambre 29 se trouvant à l'extrémité supérieure de cet alésage communique avec le circuit utilisateur comme indiqué par la flèche 23; à son autre extrémité, l'alésage débouche dans une chambre 24 en communication avec la bâche 2 par un raccord 35. Le circuit utilisateur communique avec la chambre 11 par un perçage 25. Le tiroir 22 présente un évidement annulaire 22a qui, suivant la position du tiroir,met en communication un perçage 26 débouchant dans la chambre 12 soit avec un perçage 27 relié au perçage 13, soit un perçage 28 relié à la chambre 24. Un ressort 30 maintient une coupelle 31 contre l'extrémité du tiroir 22 et tend à maintenir ce dernier dans la position dans laquelle les deux perçages 26 et 27 sont en communication l'un avec l'autre. Un perçage 32 sur lequel est interposé un gicleur 33 met la chambre 24 en communication avec le perçage 14.

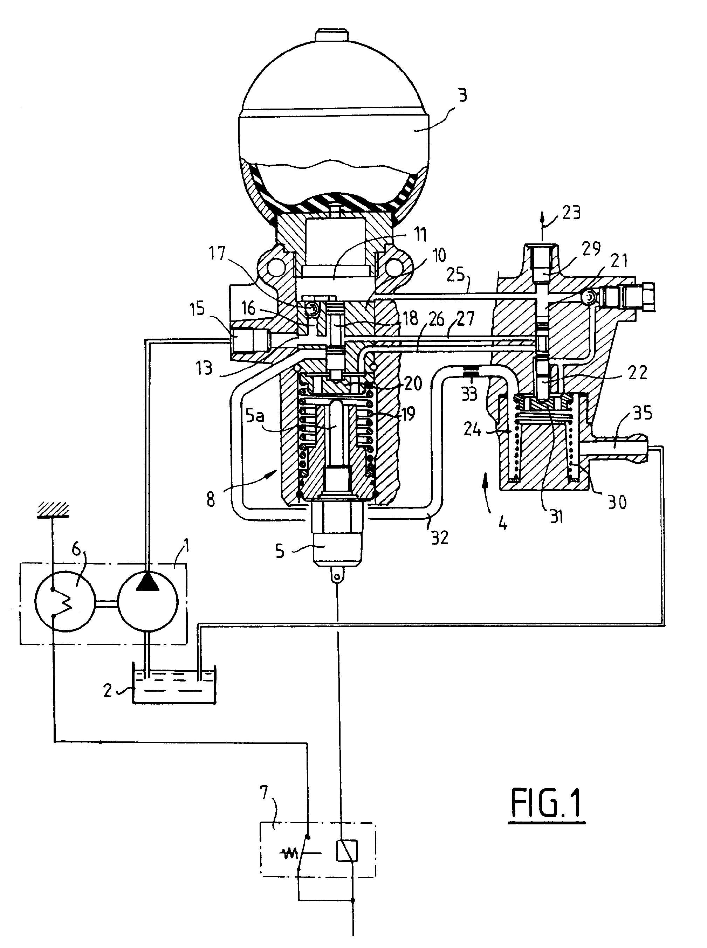

La Figure 1 montre le stade de conjonction. Les tiroirs 18 et 22 sont repoussés par leurs ressorts 19 et 30. Le débit de l'électro-pompe 1 arrive en 15 et soulève le clapet 17. La pression monte dans la chambre 11 et dans la chambre 29 vers l'utilisation. Elle monte également dans la chambre 12 par l'intermédiaire du perçage 27, de la gorge 22a du tiroir 22 et du perçage 26.

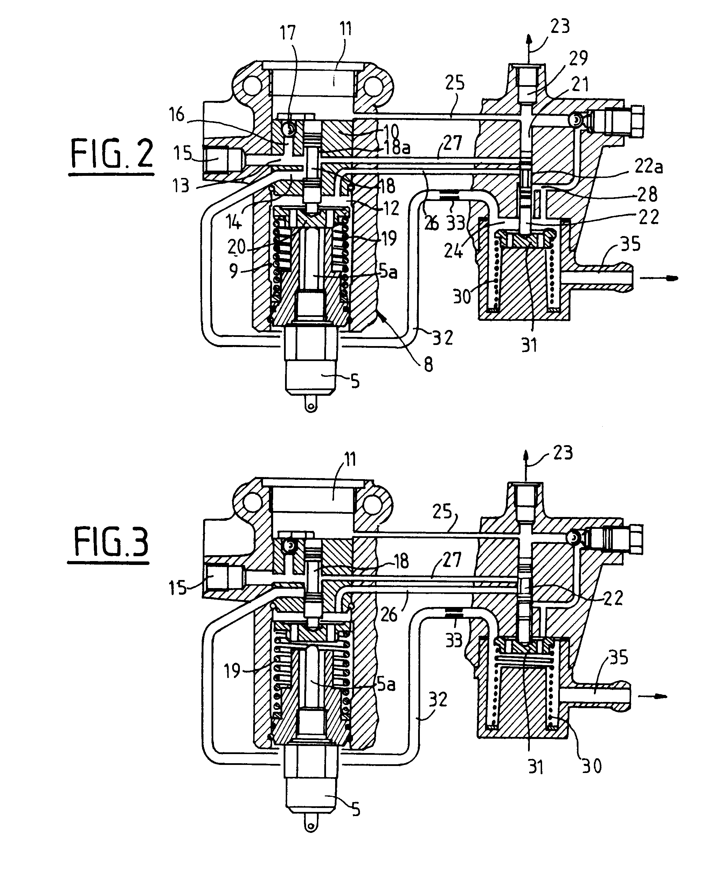

La pression dans la chambre 29 engendre sur la face supérieure du tiroir 22 une force qui va en croissant et tend à faire redescendre le tiroir. Lorsque cette force est supérieure à celle exercée par le ressort 30, le tiroir 22 se déplace et interrompt la communication entre les deux perçages 26 et 27, donc entre la chambre 12 et la réserve de pression 3 puis il met le perçage 26, donc la chambre 12, en communication avec le perçage 28 donc avec le réservoir par l'intermédiaire de la chambre 24. La pression s'annule dans la chambre 12 et le tiroir 18, soumis à la pression régnant dans la chambre 11, s'abaisse en comprimant le ressort 19 (Figure 2). La gorge 18a du tiroir 18 met alors l'arrivée du débit de l'électro-pompe en communication avec le perçage 32 donc avec la chambre 24 et la bâche 2. Le clapet 17 se referme sous l'effet de l'abaissement de pression. En fin de course du tiroir 18, la coupelle 20 vient au contact de l'aiguille 5a du détecteur 5, ce qui ferme le circuit d'alimentation du relais 7 et coupe l'alimentation de l'électro-pompe.

Une consommation du liquide dans le circuit d'utilisation entraîne une baisse de pression dans la chambre 11 et dans la chambre 29. Le tiroir 22 se déplace sous l'action du ressort 30, obture le perçage de retour 28 dans la chambre 24, et met en communication le refoulement de la pompe avec la chambre 12. La pression diminuant encore, la force engendrée par la pression sur le tiroir 18 devient inférieure à l'effort exercé par le ressort 19. Le tiroir 18 se déplace et quitte le contact avec l'aiguille 5a du détecteur 5, ce qui entraîne la mise sous tension de l'électro-pompe et son démarrage. Le débit de cette électro-pompe passe par la gorge 18a du tiroir 18 et retourne vers la bâche 2 par le gicleur 33 qui crée une légère surpression (Figure 3). Cette surpression s'établit dans la chambre 12 et engendre sur la face inférieure du tiroir 18 une force qui le déséquilibre et le remet en position de conjonction de la Figure 1.

La communication entre les perçages 13 et 14 est coupée de sorte que le liquide refoulé par l'électro-pompe ne peut plus retourner à la bâche 2 et que cette électro-pompe débite dans la chambre 11.

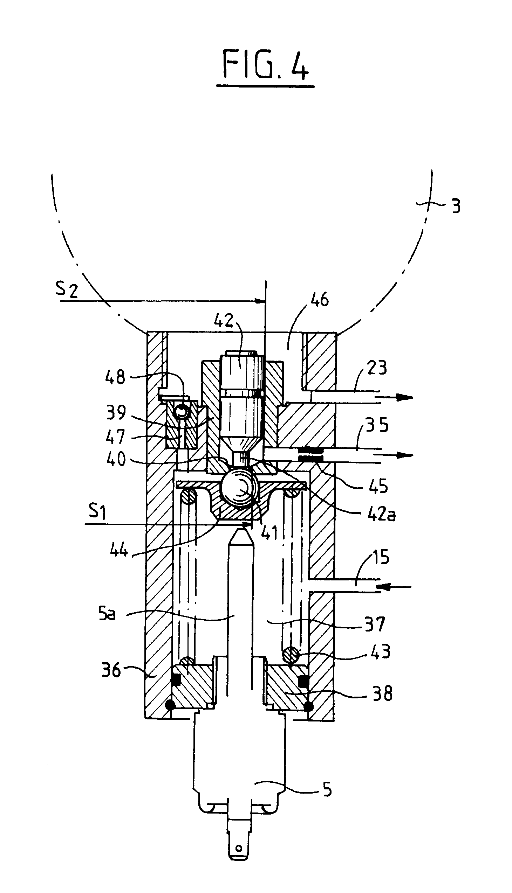

Dans le mode de réalisation de la Figure 4, le conjoncteur - disjoncteur comprend un carter 36 dans lequel sont ménagées deux chambres coaxiales 37 et 46 séparées par une cloison 49. La chambre 37 est fermée à l'une de ses extrémités par un bouchon 38 portant le détecteur 5; le raccord 15 relié à l'électro-pompe 1 débouche dans cette chambre. A l'autre extrémité de la chambre 37, dans la cloison 49, se trouve un alésage 50 recevant une douille 39, qui est munie à son extrémité tournée vers la chambre 37 d'un orifice 40 de section S1 formant siège pour une bille 41 formant clapet et dans laquelle est monté coulissant un tiroir 42 de section 52 supérieure à S1; ce tiroir comporte un appendice 42a, de section inférieure à S1, propre à repousser le clapet 41. Dans la chambre 37 se trouve un ressort 43 qui est interposé entre le bouchon 38 et une coupelle 44 servant d'appui au clapet 41. Le conduit 35 de retour au réservoir débouche dans la douille 39 entre le tiroir 42 et l'orifice 40, par l'intermédiaire d'un gicleur 45. La chambre 46 se trouvant au-dessus du tiroir 42 est reliée à la réserve de pression 3 ainsi qu'au circuit d'utilisation 23; elle est reliée à la chambre 37 par un perçage 47 sur lequel est interposé un clapet anti-retour 48.

En fonctionnement, le débit de l'électro-pompe 1 arrive par le raccord 15, passe dans la chambre 37, puis dans la chambre 46 en soulevant le clapet 48. Le ressort 43 appuie le clapet 41 sur son siège 40 et maintient la coupelle 44 écartée de l'aiguille 5a du détecteur 5.

La chambre 46 monte en pression. Cette pression agit sur le tiroir 42. La pression a la même valeur dans les deux chambres 37 et 46 et le ressort 43 exerce sur le tiroir 42 un effort qui est opposé à une force F1 ayant pour valeur P (S2 - S1).

Lorsque la pression P atteint et dépasse un niveau tel que la force F1 est supérieure à l'effort fourni par le ressort 43, le tiroir 42 et le clapet 41 se déplacent en écrasant le ressort 43. Le liquide refoulé par la pompe passe par le siège 40 du clapet 41 et retourne sans pression au réservoir par le raccord 35. La pression dans la chambre 37 chute et le clapet 48 se referme; la pression P exerce sur le tiroir 42 une force F2 qui a pour valeur P.S2 et qui s'oppose au ressort 43. Celui-ci s'écrase et la coupelle 44 vient au contact de l'aiguille 5a du détecteur 5, ce qui coupe l'alimentation de l'électro-pompe 1.

Lorsque la pression chute dans la chambre 46, la force F2 diminue; le clapet 41 remonte sous l'action du ressort 43 et perd le contact avec l'aiguille 5a du détecteur 5, ce qui assure le redémarrage de l'électro-pompe. Le débit de celle-ci retourne au réservoir par le gicleur 45, ce qui crée une légère surpression déséquilibrant le tiroir 42. Celui-ci remonte, le clapet 41 s'applique sur son siège 40 et tout le débit de la pompe passe dans la chambre 46 par le perçage 47.

**Revendications**

1. Dispositif d'alimentation en fluide sous pression comprenant un accumulateur hydropneumatique (3) et une électro-pompe (1) propre à remplir cet accumulateur de liquide sous pression, caractérisé en ce qu'il comporte un conjoncteur-disjoncteur hydraulique (4) propre à maintenir entre deux valeurs données la pression de l'accumulateur (3), interposé entre l'accumulateur (3), l'électro-pompe (1) et le réservoir (2),et un détecteur (5) de l'état du conjoncteur-disjoncteur (4) pour piloter l'électro-pompe (1) de sorte qu'avant l'arrêt et le démarrage de l'électro-pompe, le circuit dans lequel débite la pompe (1) est mis en communication avec la bâche (2) par un conduit (32-35) sur lequel est interposé un gicleur (33 ou 45).

2. Dispositif selon la revendication 1, caractérisé en ce que le détecteur (5) est fixé sur le carter (8 ou 36) du conjoncteur-disjoncteur et actionné par un tiroir (18 ou 42) assurant la mise à la bâche (2) du circuit de débit de pompe.

3. Dispositif selon la revendication 2, caractérisé en ce que le tiroir (18) est le tiroir principal d'un conjoncteur-disjoncteur à tiroir pilote (22).

4. Dispositif selon la revendication 2, caractérisé en ce que le tiroir (42) actionne un clapet à billes (41) dont la position commande le détecteur (5).

5. Dispositif selon l'une quelconque des revendications 2 à 4, caractérisé en ce que le détecteur (5) est commandé par l'intermédiaire d'une aiguille (5a) coaxiale au ressort de rappel (19 ou 43) du tiroir (18 ou 42).

**Patentansprüche**

1. Vorrichtung zur Zuführung einer Druckflüssigkeit mit einem hydropneumatischen Speicher (3) und einer zum Füllen dieses Speichers mit Druckflüssigkeit geeigneten Elektropumpe (1), dadurch gekennzeichnet, daß sie einen hydraulischen Ein-Ausschalter (4) aufweist, der dazu geeignet ist, den Druck des Speichers (3) zwischen zwei vorgegebenen Werten zu halten und der zwischen dem Speicher (3), die Elektropumpe (1) und den Sammelbehälter (2) eingeschaltet ist, sowie einen Sensor (5) für den Zustand des Ein-Ausschalters (4) zum Ansteuern der Elektropumpe (1) derart, daß vor dem Anhalten und dem Anlaufen der Elektropumpe der Kreis, in welchen die Pumpe (1) einspeist, mit dem Sammelbehälter (2) über eine Leitung (32-35) verbunden wird, in welche eine Düse (33 oder 45) eingeschaltet ist.

2. Vorrichtung nach Anspruch 1, dadurch gekennzeichnet, daß der Sensor (5) am Gehäuse (8 oder 36) des Ein-Ausschalters befestigt ist und durch einen Schieber (18 oder 42) betätigt wird, der den Anschluß des Einspeisekreises der Pumpe an den Sammelbehälter (2) bewirkt.

3. Vorrichtung nach Anspruch 2, dadurch gekennzeichnet, daß der Schieber (18) der Hauptschieber eines Ein-Ausschalters mit Steuerschieber (22) ist.

4. Vorrichtung nach Anspruch 2, dadurch gekennzeichnet, daß der Schieber (42) ein Kugelventil (41) betätigt, dessen Position den Sensor (5) ansteuert.

5. Vorrichtung nach einem der Ansprüche 2 bis 4, dadurch gekennzeichnet, daß der Sensor (5) unter Zwischenschaltung einer Nadel (5a) angesteuert wird, die koaxial zur Rückstellfeder (19 oder 43) des Schiebers (18 oder 42) angeordnet ist.

**Claims**

1. Device for feeding fluid under pressure and including a hydropneumatic accumulator (3) and an electropump (1) able to fill this accumulator with liquid under pressure, wherein it comprises a hydraulic circuit breaker (4) able to keep the pressure of the accumulator (3) between two given values, said circuit breaker being inserted between the accumulator (3), the electropump (1) and the tank (2), and a detector (5) for detecting the state of the circuit breaker (4) so as to monitor the electropump (1) so that, prior to stoppage and start up of the electropump, the circuit into which the pump (1) flows in placed in communication with the tank (2) via a pipe (32-35) on which a nozzle (33 or 45) is inserted.

2. Device according to claim 1, wherein the detector (5) is secured to the housing (8 or 36) of the circuit breaker and activated by a slide valve (18 or 42) ensuring the placing of the pump flow circuit at the tank (2).

3. Device according to claim 2, wherein the slide valve (18) is the main slide valve of a monitoring slide valve circuit breaker (22).

4. Device according to claim 2, wherein the slide valve (42) activates a ball valve (41) whose position controls the detector (5).

5. Device according to any one of claims 2 to 4, wherein the detector (5) is controlled by means of a needle (5a) coaxial to the recall spring (19 or 43) of the slide valve (18 or 42).

FIG.1

FIG.2

FIG.3

# FIG. 4